(19) Europäisches Patentamt
European Patent Office
Office européen des brevets

(11) Publication number: 0 061 717 B1

(12) **EUROPEAN PATENT SPECIFICATION**

(45) Date of publication of patent specification: **29.01.86**

(51) Int. Cl.$^4$: **C 25 B 11/06**

(21) Application number: **82102466.8**

(22) Date of filing: **24.03.82**

(54) **Substituted cobalt oxide spinels.**

(30) Priority: **25.03.81 US 247431**
**24.08.81 US 295352**
**25.03.81 US 247429**

(43) Date of publication of application:
**06.10.82 Bulletin 82/40**

(45) Publication of the grant of the patent:
**29.01.86 Bulletin 86/05**

(84) Designated Contracting States:
**BE DE FR GB IT NL**

(56) References cited:
**FR-A-2 112 388**
**FR-A-2 356 745**

(73) Proprietor: **THE DOW CHEMICAL COMPANY**
**2030 Dow Center Abbott Road P.O. Box 1967**
**Midland, MI 48640 (US)**

(72) Inventor: **Caldwell, Donald Lee**
**53 Pine Court**
**Lake Jackson Texas 77566 (US)**
Inventor: **Hazelrigg, Mark Jonathan, Jr.**
**63 So. Shamrock Court**
**Lake Jackson Texas 77566 (US)**

(74) Representative: **Weickmann, Heinrich, Dipl.-Ing. et al**
**Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820**
**D-8000 München 86 (DE)**

**EP 0 061 717 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention resides in an electroconductive composite comprising an electroconductive substrate having on at least a surface portion thereof a spinel coating.

More particularly, the invention resides in an insoluble anode for electrolysis, especially electrolysis of brine solutions, comprising an electroconductive substrate with an effective amount of a polymetal oxide coating having a spinel structure conforming substantially to the empirical formula $M_xZ_yCo_{3-(x+y)}O_4$, where o<x<1, o<y<0.5, o<(x+2y)≦1, and where M is at least one metal of Groups IB, IIA, and IIB and Z is at least one metal of Group IA. The spinel coating optionally contains a modifier metal oxide.

The invention also resides in an insoluble anode in which the electroconductive substrate is coated with a first interface layer or coating comprising one or more oxides of the group of metals consisting of Sn, Pb, Sb, Al, and In, and then an outer coating comprising an effective amount of the polymetal oxide having the spinel structure conforming substantially to the empirical formula $M_xZ_yCo_{3-(x+y)}O_4$.

The invention also resides in an insoluble anode for manufacturing oxygen by electrolysis, especially by electrolysis of water.

EP—A—0014 596 describes a mixed metal oxide electrocatalyst comprising oxides of at least two metals which is formed by the thermal decomposition of metal-organic compounds, and electrodes for electrolytic processes carrying a coating of such an electrocatalyst.

The first metal is required to be at least one metal selected from a large number of specified metals, including those of Groups IA, IIA, IB, IIB, while the second metal is required to be a different metal selected from a further large number of metals including cobalt.

Various cobalt oxide spinels coated onto electrically-conductive substrates, especially for use as anodes in brine electrolysis, are known. Of particular relevancy are U.S. Patents 3,977,958; 4,061,549; and 4,142,005.

Also of various degrees of relevancy are U.S. Patents 4,073,873; 3,711,382; 3,711,397; 4,028,215; 4,040,939; 3,706,644; 3,528,857; 3,689,384; 3,773,555; 3,103,484; 3,775,284; 3,773,554; 3,632,498; and 3,663,280.

The spinel coating is prepared by applying a fluid mixture of the metal oxide precursors to the substrate and heating under oxidizing conditions at a temperature in a range effective to form the coating in-situ on the substrate. A "polymetal" cobalt spinel is used herein to describe a spinel containing a plurality of metals, of which cobalt is one.

Fig. 1 illustrates data from only certain embodiments described hereinafter.

Cobalt oxide based anode coatings of the spinel type are sensitive to preparation temperature. Anodes prepared at temperatures above 450°C tend to have high operating potentials in service; furthermore, these potentials tend to increase more rapidly than those of anodes prepared at lower temperatures. It has unexpectedly been found that the anodes of the present invention are more tolerant of high preparation temperatures than are those of the prior art. A high temperature yields a tougher, more highly sintered active coating, and is thus desirable, if low operating potentials can be maintained.

In general, the spinel coating is prepared in-situ on the electroconductive substrate by applying a fluid mixture (preferably a solution) of the spinel-forming precursors along with, optionally, any modifier metal oxide precursors desired, to the substrate, then heating at a temperature and for a time effective to produce the spinel structure as a layer or coating on the substrate.

The temperature effective in producing the spinel structure is generally in the range of from 200°C to 475°C, preferably in the range of from 250°C to 400°C. At temperatures below about 200°C the formation of the desired spinel structure is likely to be too slow to be feasible and it is likely that substantially no spinel will be formed, even over extended periods of time. At temperatures above about 475°C there is likely to be formed other cobalt oxide structures, such as cobaltic oxide ($Co_2O_3$) and/or cobaltous oxide (CoO), whether substituted or not. Any heating of the spinel above about 450°C should be of short duration of not more than about 5 minutes, to avoid altering the desired spinel structures to other forms of the metal oxides and to substantially avoid oxidizing the substrate. Any modifier metal oxides present will be formed quite well at the spinel-forming temperatures.

The length of time at which the heating is done to form the spinel structure is, generally, inversely related to the temperature. At lower temperatures within the prescribed range, the time may be as much as 8 hours or more without destroying the spinel structure or converting substantial amounts of it to other oxide forms. At the upper end of the prescribed heating range, the time of heating should not be extended beyond the time needed to form the desired spinel structure because extended heating times may destroy or convert a substantial amount of the spinel to other oxide forms; at the upper end of the range a heating time in the range of from 1 to 5 minutes is generally satisfactory in forming the spinel without forming other oxide forms.

The substrates of interest in the present invention are electroconductive metals comprising the valve metals or film-forming metals which includes titanium, tantalum, zirconium, molybdenum, niobium, tungsten, hafnium, and vanadium or alloys thereof. Titanium is preferred as a substrate for preparing anodes to be used in electrolysis of brine. Other electroconductive substrates within the purview of this invention are, e.g., nickel, nickel alloys, steels, and stainless steels.

The precursor cobalt compounds used in making the present spinel structures may be any

thermally-decomposable oxidizable compound which, when heated in the prescribed range, will form an oxide of cobalt. The compound may be organic, such as cobalt octoate or cobalt 2-ethyl hexanoate and the like, but is preferably an inorganic compound, such as cobalt nitrate, cobalt hydroxide, cobalt carbonate, and the like. Cobalt nitrate is especially preferred.

The precursor metal compounds of Groups IA, IB, IIA, and IIB and of the modifier metal oxides (if used) may be any thermally-decomposable oxidizable compound which, when heated in the prescribed range, will form oxides. Organic metal compounds may be used, but inorganic metal compounds are generally preferred.

Modifier metal oxides may be incorporated into the substituted $Co_3O_4$ coating to provide a tougher coating. The modifier metal oxide is selected from oxides of the metals of the following listed groups:

Group III-A (Scandium, Yttrium)
Group IV-A (Titanium, Zirconium, Hafnium)
Group V-A (Vanadium, Niobium, Tantalum)
Group VI-A (Chromium, Molybdenum, Tungsten)
Group VII-A (Manganese, Technetium, Rhenium)
Lanthanides (Lanthanum to Lutetium)
Actinides (Actinium to Uranium)
Group III-B Metals (Aluminum, Gallium, Indium, Thallium)
Group IV-B Metals (Germanium, Tin, Lead)
Group V-B Metals (Antimony, Bismuth).

The modifier metal oxide is, preferably, an oxide of cerium, bismuth, lead, vanadium, zirconium, tantalum, niobium, molybdenum, chromium, tin, aluminum, antimony, titanium, or tungsten. Mixtures of modifier metal oxides may also be used.

Most preferably, the modifier metal oxide is selected from metals of the group consisting of zirconium, vanadium, and lead, or mixtures of these, with zirconium being the most preferable of these.

The amount of modifier oxide metal or metals may be in the range of from zero to about 50 mole percent, most preferabaly from 5 to 20 mole percent of the total metal of the coating deposited on the electroconductive substrate. Percentages, as expressed, represent mole percent of metal, as metal, in the total metal content of the coating. The modifier metal oxide is conveniently prepared along with the substituted $Co_3O_4$ from thermally decomposable oxidizable metal compounds, which may be inorganic metal compounds or organic metal compounds.

The carrier for the precursor metal compounds is preferably water, a mixture of water/acetone, or a mixture of water and a water-miscible alcohol, e.g., methanol, ethanol, propanol, or isopropanol. The carrier is one which readily evaporates during spinel formation. The precursor metal compounds are preferably soluble in the carrier or at least in very finely-divided form in the carrier. Solubilizing agents may be added to the mixture, such as ethers, aldehydes, ketones, tetrahydrofuran, dimethylsulfoxide, and the like. In some instances, adjustments to the pH of the mixture may be made to enhance the solubility of the metal compounds, but attention should be given to whether or not the pH adjuster (acid or base) will add any unwanted metal ions. Ammonia is generally the best alkalizer since it does not add metal ions.

The procedure for preparing the coatings comprises starting with a clean substrate with surface oxides and contaminants substantially removed, at least on the surface(s) to be coated. The mixture of metal oxide precursors in a liquid carrier is applied to the substrate, such as by dipping, spraying, brushing, painting, or spreading. The so-coated substrate is subjected to a temperature in the prescribed range for a period of time to thermally oxidize the metal compounds to oxides, thereby forming the spinels of the present invention, along with any modifier metal oxides or second-phase metal oxides which may be co-prepared but which are not part of the expanded cobalt oxide spinel crystal structure. Generally, the first such application (which usually gives a relatively thin layer) is done quickly to avoid excessive oxidation of the substrate itself. Then as additional applications are made (i.e., applications of the precursor liquid carrier containing the metal compounds, followed by thermal oxidation) the thickness of the coating builds up, becomes tighter and denser, and there is a substantially reduced risk of excessively oxidizing the substrate under the spinel coating. Each subsequent layer is found to combine and unite quite readily with preceding layers and a contiguous spinel coating is formed which is adhered quite well to the substrate. It is preferred that at least 3 such layer-applications are employed, preferably from 6 to 12 such layer-applications. If the optional interface layer is omitted, the procedure is substantially the same, taken care not to overheat each application of spinel layer which could cause excessive oxidation of the substrate.

It is best to charge the initial mixture of metal compounds into the liquid carrier in such a way that the desired ratio of metals are present on a molar basis to satisfy the stoichiometry of the desired polymetal spinel, also referred to herein as expanded cobalt spinel or substituted cobalt spinel.

The following enumerated paragraphs are presented to offer a simplified explanation, based on belief and experience, of what transpires when one or more monovalent or divalent metal ions replace a portion of the cobalt ions in a cobalt oxide spinel, but the invention is not meant to be limited by, or confined to, this simplified explanation. This explanation is intended to cover metals of Groups IA, IIA, IB, and IIB insofar as replacement of cobalt ions in a cobalt oxide spinel structure is concerned.

1. A "single-metal" cobalt oxide spinel, $Co_3O_4$, is understood as having, per molecule, one $Co^{++}$ ion and two $Co^{+++}$ ions to satisfy the valence requirements of four $O^{--}$ ions; thus the single metal cobalt spinel

may be illustrated by the empirical formula $Co^{++}Co_2^{+++}O_4^{--}$ to show the stoichiometric valence balance of cobalt cations with oxygen anions.

2. When divalent metal ions are substituted into the cobalt oxide spinel structure, they tend to replace divalent cobalt ions. For example when $Mg^{++}$ is fully substituted into the $Co_3O_4$ spinel structure, it replaces $Co^{++}$ giving a spinel illustrated by the empirical formula $Mg^{++}Co_2^{+++}O_4^{--}$.

3. When monovalent metal ions are substituted into the cobalt oxide spinel structure they tend to replace divalent cobalt ions. For each monovalent metal ion introduced into the cobalt oxide spinel, an additional $Co^{++}$ is oxidized to $Co^{+++}$. The maximum monovalent metal ion substitution in such a spinel may be illustrated as, for example, $Li_{0.5}^{+}Co_{2.5}^{+++}O_4^{--}$, to show stoichiometric valence balance. The empirical formula may be illustrated as, for example, $Li_yCo_{3-y}O_4$, where y is not more than 0.5, 3–y is at least 2.5, and where (y times Li valence) plus (3-y times cobalt valence) equals 8.

4. When two divalent metal ions and one alkali metal ion are substituted into the cobalt oxide spinel structure, then the structure can be written, empirically, as e.g., $M_xM'_{x'}Z_yCo_{3-(x+x'+y)}O_4$.

5. When at least one monovalent metal ion and at least one divalent ion are substituted into the cobalt oxide spinel structure, then the structure can be written, empirically, as $M_xZ_yCo_{3-(x+y)}O_4$ or as, e.g.,

$$M_xM'_{x'}Z_yCo_{3-(x+x'+y)}O_4$$

or, e.g., as

$$M_xM'_{x'}Z_yZ'_{y'}Co_{3-(x+x'+y+y')}O_4.$$

6. When two monovalent metal ions and two divalent ions are substituted into the cobalt oxide spinel structure, then the structure can be written, empirically, as e.g.,

$$M_xM'_{x'}Z_yZ'_{y'}Co_{3-(x+x'+y+y')}O_4.$$

7. If an excess of monovalent and/or divalent metal ions are present in the mixture from which the substituted cobalt oxide structures are prepared, the excess metal values tend to form a separate metal oxide phase which is not a spinel structure but which is present with the spinel structure.

8. It will be understood by practitioners of these arts that there may be some degree of imperfect spinel crystals which, if they could be isolated and measured separately may not conform exactly to the empirical structures written in this disclosure, but the spinel products prepared according to this invention can be said to conform substantially to the empirical formulae shown.

9. If metal values are in the mixture (from which the spinel structures are formed) which do not effectively replace cobalt ions in the cobalt oxide spinel structure, these metals tend to form separate metal oxide phases which act as modifiers of the spinel structures. For instance, where the spinel structures are formed by building up a contiguous layer of the spinel on a substrate by repeated applications of spinel-forming ingredients, each application being followed by the heating step, the modifier metal oxides are beneficial in providing toughness and abrasion-resistance to the layer. The amount of modifier metal oxides should be limited so that the desired spinel is the predominant ingredient of the coating.

The metals of the relevant groups of the Periodic Table are as follows:

| IA | IIA | IB | IIB |
|---|---|---|---|
| Li | Be | Cu | Zn |
| Na | Mg | Ag | Cd |
| K | Ca | Au | Hg |
| Rb | Sr | | |
| Cs | Ba | | |
| Fr | Ra | | |

Of the metals in Group IA, lithium, sodium, and potassium are preferred. Lithium is most preferred. In Groups IIA, IB and IIB, magnesium, copper and zinc are preferred.

Operative upper limits for molar percentage of the M and Z metals which form polymetal spinels with cobalt are, based on total metal content of the spinel: $M \leqq 33.3$ percent, $Z \leqq 16.7$ percent and may be zero, and $M+Z \leqq 33.3$ percent. Any excess of M and Z will form a separate phase of the metal oxide amongst the spinel crystals. On a molar metal basis it is preferred that neither M nor Z be less than about 8 percent and 4 percent respectively.

The following examples illustrate the invention, but the invention is not limited to the particular embodiments shown.

The type of test cell utilized in Example I was a conventional vertical diaphragm chlorine cell. The

diaphragm was deposited from an asbestos slurry onto a foraminous steel cathode in the conventional manner. Anode and cathode were each approximately 3"×3" (7.62 cm×7.62 cm). Current was brought to the electrodes by a brass rod brazed to the cathode and a titanium rod welded to the anode. The distance from the anode to the diaphragm face was approximately 1/4 inch (0.635 cm). The temperature of the cell was controlled by means of a thermocouple and heater placed in the anolyte compartment. A 300 gpl (grams per liter) sodium chloride solution was fed continuously to the anolyte compartment via a constant overflow system. Chlorine, hydrogen, and sodium hydroxide were withdrawn continuously from the cell. Anolyte and catholyte levels were adjusted to maintain an NaOH concentration in the catholyte of about 110 gpl. Power was supplied to the cell by a current-regulated power supply. Electrolysis was conducted at an apparent current density of 0,0775 $A/cm^2$ (0.5 ampere per square inch) anode area.

An etching solution employed in the examples below was prepared by mixing 25 ml analytical reagent hydrofluoric acid (48 percent HF by weight), 175 ml analytical reagent nitric acid (approximately 70 percent $HNO_3$ by weight), and 300 ml deionized $H_2O$.

Anode potentials were measured in a laboratory cell specifically designed to facilitate measurements on 3"×3" (7.62×7.62 cm) anodes. The cell is constructed of a synthetic resinous material. Anode and cathode compartments are separated by a commercial PTFE membrane. The anode compartment contains a heater, a thermocouple, a thermometer, a stirrer, and a Luggin capillary probe which is connected to a saturated calomel reference electrode located outside the cell. The cell is covered to minimize evaporative losses. Electrolyte is a 300 gpl sodium chloride brine solution. Voltage potentials are measured with respect to saturated calomel at ambient temperature (25—30°C). Lower potentials imply a lower power requirement per unit of chlorine produced, and thus more economical operation.

Example I

Six pieces of ASTM Grade 1 titanium expanded mesh sheets of approximately 3"×3"×0.050" (7.62×7.62×0.13 cm) size were dipped in 1,1,1-trichloroethane, air dried, dipped in the above-described HF—$HNO_3$ etching solution for approximately 30 seconds, rinsed with deionized water, and air dried. The mesh was blasted with $Al_2O_3$ grit to a uniform rough surface and blown clear with air. Six coating solutions were prepared by mixing appropriate quantities of $Co(NO_3)_2 \cdot 6H_2O$; $Zn(NO_3)_2 \cdot 6H_2O$; $Li(NO_3)$; $Mg(NO_3)_2 \cdot 6H_2O$, and aqueous $ZrO(NO_3)_2$ with deionized $H_2O$ to give the mole ratios listed in Table I below. Each sheet was brushed with the appropriate coating solution, baked in a 375°C convection oven for about 10 minutes, removed, and cooled in air about 10 minutes. Ten additional coats were applied in a similar manner. A twelfth coat was applied and baked 60 minutes at 375°C. Anode potentials were determined for each anode, utilizing the laboratory cell described above. The anodes were then placed in the diaphragm test cell as described above and operated continuously for over 50 days (Set 1) and over 200 days (Sets 2 and 3). The loss of coating on each anode was then determined by weight difference, and these losses were then calculated as "percent loss per year".

As can be seen from Table I, the addition of Group IA metal, specifically Li, to the coating has the beneficial and unexpected result of reducing the rate of coating loss, thus prolonging the life of chlorine cell anode coatings containing such additions.

TABLE I

| Set/ sample | Mole ratio of metals in coating** Zn | Mg | Li | Co | Zr | Value of $x^{(1)}$ | $y^{(1)}$ | Anode[(2)] potential | Rate %/yr. |
|---|---|---|---|---|---|---|---|---|---|
| 1/a* | 1 | 0 | 0 | 2 | 0 | 1.000 | .000 | 1088 | 14.0 |
| b | 6 | 0 | 1 | 17 | 0 | .750 | .125 | 1090 | 11.1 |
| 2/a* | 5 | 0 | 0 | 10 | 1 | 1.000 | .000 | 1085 | 14.6 |
| b | 30 | 0 | 5 | 85 | 8 | .750 | .125 | 1100 | 5.7 |
| 3/a* | 15 | 5 | 0 | 40 | 4 | 1.000 | .000 | 1086 | 44.9 |
| b | 45 | 15 | 10 | 170 | 16 | .750 | .125 | 1089 | 14.9 |

* Comparative examples.
** Zr is present as $ZrO_2$ dispersed in the spinel.
(1) Approximately values of x and y in $M_xZ_yCo_{3-(x+y)}O_4$.
(2) Anode potential is measured in millivolts at 0,0775 $A/cm^2$ (0.5 amp/$in^2$), 70°C vs. standard calomel electrode at 30°C.

The interface layer of the present invention functions by reacting with the valve metal oxide as it is formed on the surface of the substrate, rendering it electrically conductive. The mechanism by which this is accomplished is uncertain. Trivalent metals such as indium may function as conventional semi-conductor dopants in the (tetravalent) valve metal oxide lattice; tetravalent metals such as tin may form conductive solid solutions with the valve metal oxide, analogous to $RuO_2$—$TiO_2$ solid solutions.

One feature that distinguishes the present invention from interface layers of platinum group metals and/or oxides is that the interface materials of the present invention cannot in themselves form the basis of an operable anode coating: tin oxide can be used as a dopant in solid solution anode coatings but is insufficiently stable to be used alone, and antimony and indium oxides are highly reactive in typical brine electrolysis anolyte. It is thus unexpected that their presence in interface layers stabilizes the operation of anodes in brine electrolysis.

In general, the interface metal oxide coating is prepared on a cleaned, oxide-free, electroconductive substrate, such as titanium, by applying to the substrate a layer of a precursor metal compound which, when thermally decomposed in air, yields the oxide of the metal affixed in-situ on the substrate. More than one metal oxide precursor may be used simultaneously, so long as the precursor compound is at least one thermally decomposable compound of Sn, Pb, Sb, Al, In, or mixtures of these. The precursor may be a metal-organic, or otherwise contain organic moieties, but is preferably an inorganic compound. It is preferred that the precursor metal compound be carried in a liquid medium, such as water, alcohol, water/alcohol, water/acetone, and the like; preferably the precursor metal compound is soluble in the liquid medium. During the heating step of the process the liquid carrier is boiled away and plays no further part in the process. The steps of applying the metal oxide precursors, followed by heating to create the metal oxides, is beneficially repeated one or more times, thereby assuring that a contiguous well-adhered interface layer or coating of the metal oxide is obtained, though only one layer is operable. It is best if this metal oxide interface layer has a thickness in the range of from 2 to 40 nm; coatings as thin as about 1 nm demonstrate operability as do coatings thicker than 40 nm but there are no additional benefits to be derived from such thicker coatings which are commensurate with the expense of laying down such thicker coatings. The temperature used in forming the metal oxide interface layer may be from the decomposition temperature (in air) of the metal oxide precursor to as high as several hundred degrees centigrade, preferably a temperature in the range of from 200°C to 450°C, most preferably from 250° to 450°C is used. The baking time is generally in the range of from 1.5 to 60 minutes, the higher temperatures requiring the lesser times. Excess time at the higher temperatures can lead to unwanted oxidation of the substrate.

The spinel coating is then prepared in-situ on the so-coated electroconductive substrate in accordance with the procedure hereinbefore described to produce the spinel structure as a layer or coating on the pre-coated substrate. The spinel coating is found to form a contiguous, well-adhered layer on the undercoating of the metal oxide which was applied first. By using the undercoating as prescribed in the present invention, the preferred temperature range for formation of the spinel topcoat becomes 400°C to 450°C, most preferably 400°C to 425°C.

Example II

Fifteen pieces of ASTM Grade I titanium expanded mesh sheets were prepared in accordance with the same procedure set forth in Example I. Two interface coating precursor solutions were prepared as follows: Solution (A) contained 15.1 g of $SnCl_4 \cdot 5H_2O$ dissolved in 5 ml concentrated reagent HCl and 30 ml technical isopropyl alcohol; Solution (B) contained 2.03 g $SbCl_3$ and 15.1 g $SnCl_4 \cdot 5H_2O$ dissolved in 5 ml concentrated reagent HCl and 30 ml technical isopropyl alcohol. The active spinel coating precursor, Solution (C), was prepared by mixing appropriate quantities of

$$Co(NO_3)_2 \cdot 6H_2O, \qquad Zn(NO_3)_2 \cdot 6H_2O,$$

aqueous $ZrO(NO_3)_2$ solution and deionized $H_2O$ to give a mole ratio of 10 Co:5 Zn:1 Zr.

Five sets of anodes were prepared, each containing three samples. Sample (a) of each set contained no interface coating, and thus serves as a comparative example. Sample (b) contains an interface coating of tin oxide obtained from Solution (A). Sample (c) contains an interface coating of tin and antimony oxides obtained from Solution (B).

All interface coatings were prepared at 450°C. For all samples (b) and (c) the specimens were brushed with the appropriate interface solution, baked in a 450°C convection oven for about 10 minutes, removed and cooled in air about 10 minutes. One additional interface coat was applied in a similar manner. For sets (1) and (2) Sample (a) was given two coats of active spinel at 450°C while Samples (b) and (c) were being given their two interface coats.

All 15 anodes were given 8 coats of active spinel in the following manner: the substances treated as described above were brushed with solution (C), placed in a convection oven heated to the temperature listed in Table II below, baked for about 10 minutes, removed, and cooled in air about 10 minutes. Seven additional coats were applied in a similar manner. After all coats were applied and baked, the anodes were given a final bake at 375°C for about 1 hour.

Potentials of the fifteen anodes were measured in the laboratory cell described above. The cell was filled with 300 gpl $NaCl_2$ brine solution and heated to about 70°C and electrolysis was conducted at an apparent current density of 0,0775 A/cm$^2$ (0.5 ampere per square inch) anode area. Results are shown in Table II and Figure 1. It is apparent that the anodes of the present invention are much less sensitive to preparation temperature than are those of the comparative example.

TABLE II

| Set/sample | Bake temperature (°C) Interface coat[1] | Active spinel[2] | Interface coat oxides | Anode potential[3] |
|---|---|---|---|---|
| 1 a* | 450[4] | 450 | NA | 1340 |
| b | 450 | 450 | Sn | 1125 |
| c | 450 | 450 | Sn+Sb | 1112 |
| 2 a* | 450[4] | 425 | NA | 1188 |
| b | 450 | 425 | Sn | 1098 |
| c | 450 | 425 | Sn+Sb | 1089 |
| 3 a* | NA | 400 | NA | 1102 |
| b | 450 | 400 | Sn | 1097 |
| c | 450 | 400 | Sn+Sb | 1092 |
| 4 a* | NA | 375 | NA | 1095 |
| b | 450 | 375 | Sn | 1097 |
| c | 450 | 375 | Sn+Sb | 1089 |
| 5 a* | NA | 350 | NA | 1090 |
| b | 450 | 350 | Sn | 1094 |
| c | 450 | 350 | Sn+Sb | 1094 |

* Comparative example.
NA=Not applied.
[1] Two coats.
[2] Eight coats.
[3] Anode potential is measured in millivolts at 0,0775 A/cm$^2$ (0.5 amp/in$^2$), 70°C vs. standard calomel electrode at 25—30°C.
[4] Two coats of active spinel precursor.

Example III

A piece of ASTM Grade 1 titanium expanded mesh sheet was prepared in accordance with the same procedure set forth in Example I. An interface coating precursor solution was prepared as follows: 1.30 g of $InCl_3 \cdot 4H_2O$ and 0.009 g $SbCl_3$ were dissolved in 3.2 g concentrated reagent HCl and 20.5 g technical isopropyl alcohol. An active spinel coating precursor, solution was prepared by mixing appropriate quantities of $Co(NO_3)_2 \cdot 6H_2O$, $Zn(NO_3)_2 \cdot 6H_2O$, aqueous $ZrO(NO_3)_2$ solution, and deionized $H_2O$ to give a mole ratio of 10 Co:5 Zn:1 Zr.

The specimen was brushed with the interface solution, baked in a 400°C convection oven for about 10 minutes, removed, and cooled in air about 10 minutes. The specimen was then given 12 coats of spinel. Each coat was applied by brushing with spinel coating precursor, baking at 400°C for 10 minutes, removed from the oven, and cooling in air about 10 minutes. After the twelfth spinel coat had been baked the anode was given a final bake at 375°C for about one hour.

The anode was placed in a diaphragm chlorine cell as described above and operated for over 1.5 years. The cell was shut down from time-to-time for measurement of the anode potential in the laboratory cell, also described above. The potential of the anode at 0,0775 A/cm$^2$ (0,5 ampere per square inch) apparent current density and 70°C, measured versus saturated calomel at 30°C, was 1082 mv prior to start-up, 1104 mv after 0.15 yr. operation, and 1093 mv after 1.5 yr. operation. It thus demonstrated stable operation in long-term service as a chlorine anode.

The type of test cell utilized in water electrolysis was a vertical diaphragm cell of a construction as hereinbefore described with equal anolyte and catholyte levels. The cell was started up on 20 wt. percent KOH solution. Water or 20 wt. percent KOH solution was added periodically to the cell to maintain a 20 wt. percent KOH strength. Hydrogen and oxygen were withdrawn continuously from the cell. Power was supplied to the cell by a current regulated power supply. Electrolysis was conducted at apparent current densities of 0,0775 and 0,155 A/cm$^2$ (0.5 and 1.0 ampere per square inch) anode area.

The anodes prepared in accordance with the procedure set forth in Example II were found to be useful and operable as oxygen anodes in producing oxygen by electrolysis of KOH, NaOH, $Na_2SO_4$, and other solutions.

Example IV

A piece of ASTM grade 1 titanium expanded mesh sheet was prepared in accordance with the procedure of Example I. A coating solution was prepared by mixing appropriate quantities of

$CO(NO_3)_2 \cdot 6H_2O$, $Zn(NO_3)_2 \cdot 6H_2O$, aqueous $ZrO(NO_3)_2$ solution, and deionized $H_2O$ to give a 10:5:1 Co:Zn:Zr mole ratio. The titanium sheet was brushed with the coating solution, baked in a 375°C convection oven for about 10 minutes, removed, and cooled in air about 10 minutes. Ten additional coats were applied in a similar manner. A twelfth coat was applied and baked 60 minutes at 375°C.

The oxygen anode potential was determined, utilizing the measurement cell described above. The anode was then placed in the diaphragm water electrolysis cell described above and operated continuously for 108 days at 0,0775 A/cm$^2$ (0.5 ampere per square inch) at 70°C. The cell current density was then raised to 0,155 A/cm$^2$ (1.0 ampere per square inch) (70°C) and the cell operated for an additional 133 days. The cell ran at a steady 1.9 volts at 0,0775 A/cm$^2$ (0.5 ampere per square inch) and a steady 2.1 volts at 0,155 A/cm$^2$ (1.0 ampere per square inch). At the end of the test the anode coating had gained 1.8 percent in weight.

Example V

The oxygen anode potentials of $RuO_2 \cdot TiO_2$, $Co_3O_4$, $Co_2ZnO_4$, and $Co_2ZnO_4 \cdot 0.2\ ZrO_2$ minicell anodes were measured in 1.5 M sodium sulfate solution adjusted to pH's of 1, 3, and 5 with sulfuric acid. The temperature was 70°C and the current density range was 0,00155 to 0,0775 A/cm$^2$ (0.01 to 0.50 amperes per square inch). The experiments were short term and utilized the lab cell described above. Table III below reproduces the data obtained at pH 5. As can be seen, the cobalt oxide based anodes exhibit a 100 mV higher oxygen overvoltage than the $RuO_2$—$TiO_2$ anode at low current densities 0,00155 A/cm$^2$ (0.01 ampere per square inch). The difference in anode potential between the two decreases with increasing current density and for the $Co_2ZnO_4$ anode is approximately the same at 0,0775 A/cm$^2$ (0.5 ampere per square inch).

TABLE III

| Current density amp/in$^2$ | Anode potential (mV vs. SCE (30°C)) $RuO_2 \cdot TiO_2$ | $Co_3O_4$ | $Co_2ZnO_4$ | $Co_2ZnO_4 \cdot 0.2\ ZrO_2$ |
|---|---|---|---|---|
| 0.5 | 1299 | 1336 | 1297 | 1345 |
| 0.4 | 1277 | 1316 | 1285 | 1330 |
| 0.3 | 1244 | 1292 | 1270 | 1306 |
| 0.2 | 1212 | 1265 | 1250 | 1287 |
| 0.1 | 1158 | 1225 | 1223 | 1250 |
| 0.09 | 1148 | 1220 | 1218 | 1244 |
| 0.08 | 1140 | 1214 | 1213 | 1236 |
| 0.07 | 1131 | 1207 | 1208 | 1231 |
| 0.06 | 1122 | 1201 | 1201 | 1222 |
| 0.05 | 1110 | 1191 | 1195 | 1214 |
| 0.04 | 1098 | 1181 | 1185 | 1205 |
| 0.03 | 1083 | 1170 | 1176 | 1192 |
| 0.02 | 1065 | 1152 | 1163 | 1180 |
| 0.01 | 1036 | 1127 | 1137 | 1151 |

Example VI

A piece of ASTM Grade 1 titanium expanded mesh sheet was prepared in accordance with the same procedure of Example I. An interface coating precursor solution is prepared as follows: 1.30 g of $InCl_3 \cdot 4H_2O$ and 0.009 g $SbCl_3$ are dissolved in 3.2 g concentrated reagent HCl and 20.5 g technical isopropyl alcohol. An active spinel coating precursor solution is prepared by mixing appropriate quantities of $Co(NO_3)_2 \cdot 6H_2O$, $Zn(NO_3)_2 \cdot 6H_2O$, aqueous $ZrO(NO_3)_2$ solution, and deionized $H_2O$ to give a mole ratio of 10 Co:5 Zn:1 Zr.

The specimen is brushed with the interface solution, baked in a 400°C convection oven for about 10 minutes, removed, and cooled in air about 10 minutes. The specimen is then given 12 coats of spinel. Each coat is applied by brushing with the active spinel precursor solution, baking at 400°C for 10 minutes,

removing from the oven, and cooling in air for about 10 minutes. After the twelfth spinel coat has been baked the anode is given a final bake at 375°C for about 1 hour.

The anode is found to be useful and operable for producing oxygen in a KOH cell as described above and also in a sodium sulfate cell, either aqueous or non-aqueous.

Example VII

Other polymetal spinel outer coatings (especially containing $ZrO_2$ dispersed therein) which are effective as anodic material for producing oxygen by electrolysis and which also benefit from the interface layer of oxides of Sn, Sb, Pb, Al, In, or mixtures of these include, for example (approx. values):

| | |
|---|---|
| $Li_{0.125}Zn_{0.5625}Cu_{0.1875}Co_{2.125}O_4$ | $Li_{0.375}Zn_{0.25}Co_{2.375}O_4$ |
| $Li_{0.25}Zn_{0.50}Co_{2.25}O_4$ | $Li_{0.125}Mg_{0.75}Co_{2.125}O_4$ |
| $Li_{0.125}Zn_{0.5625}Mg_{0.1875}Co_{2.125}O_4$ | $Li_{0.125}Zn_{0.75}Co_{2.125}O_4$ |
| $Li_{0.125}Cu_{0.75}Co_{2.125}O_4$ | $ZnCo_2O_4$ |
| $Zn_{0.75}Mg_{0.25}Co_2O_4$ | $Zn_{0.25}Ag_{0.375}Co_{2.375}O_4$ |
| $Zn_{0.5}Co_{2.5}O_4$ | $Zn_{0.25}Co_{2.75}O_4$ |
| $Zn_{0.5}Ba_{0.5}Co_2O_4$ | $Zn_{0.5}Mg_{0.5}Co_2O_4$ |
| $Zn_{0.5}Sr_{0.5}Co_2O_4$ | $Zn_{0.5}Ca_{0.5}Co_2O_4$ |
| $Zn_{0.5}Cu_{0.5}Co_2O_4$ | $Zn_{0.5}Cd_{0.5}Co_2O_4$ |

Lithium ions substitute for $Co^{+2}$ ions in the tetrahedral sites of the spinel and this substitution can be studied using infrared spectroscopy, x-ray diffraction and ESCA. Additional Li-containing phases are observed at high Li/Co ratios. The presence of additional phases is reasonable when one considers the charge balance requirements of the spinel. Upon substitution for a $Co^{+2}$ ion, the monovalent Li ion must be balanced by the oxidation of a remaining $Co^{+2}$ to $Co^{+3}$. This appears to place a theoretical ceiling of 1/5 on the permissible Li/Co ratio one may use without encountering separate phases. This theoretical permissible ratio is altered by inclusion of other divalent metal ions, such as $Zn^{+2}$ and $Mg^{+2}$, in the spinel structure. It is interesting to note that divalent Zn (or Mg) causes a lattice expansion (by x-ray diffraction) whereas monovalent Li causes a lattice contraction.

Within the purview of the present invention is the production of oxygen by the electrolysis of acidic, neutral, or basic aqueous solutions, and also organic compounds contained in organic and/or inorganic solvents or adequate conductivity. The aqueous solutions may be, e.g., NaOH, KOH, LiOH, $Na_2SO_4$, $H_2SO_4$, $Na_3PO_4$, $Na_2HPO_4$, $NaH_2PO_4$, $H_3PO_4$, and the like. Supporting electrolytes used to increase the conductivity of non-aqueous solutions may be $LiClO_4$, $LiBF_4$, $LiPF_6$, $R_4N^+BF^-{}_4$, $R_4N^+ClO^-{}_4$, (R=alkyl), and the like.

Also within the purview of the present invention, using the active anodes described herein, is the preparation of oxygen-containing organic compounds, such as the preparation of benzoquinone by electrolysis of aqueous phenol solution using methods substantially as described in U.S. 3,509,031 or in "Introduction to Organic Electrochemistry" by M. R. Rifi and F. H. Cavitz, published by Marcel Dekker, Inc., New York, 1974. Other such anodic oxidations are also within the purview of the present invention, using the anodes disclosed here.

The anodes of the present invention may be used for electrolysis at ambient temperature and pressure or at elevated temperature and pressure. The electrolyte concentration ranges from saturation down to the lower limit dictated by economics and high cell voltage encountered at low concentration.

**Claims**

1. An electrically-conductive composite comprising an electrically-conductive substrate of a film forming metal having, on at least a portion thereof, a conductive spinel coating, characterized in that the spinel coating comprises a metal cation substituted cobalt oxide spinel structure conforming substantially to the empirical formula $M_xZ_yCo_{3-(x+y)}O_4$, where

M represents at least one metal of Group IB, IIA, or IIB, where

Z represents at least one metal of Group IA, where

x is a numerical value greater than zero, but not greater than 1, where

y is a numerical value greater than zero, but not greater than 0.5, where

the sum of x and 2y is greater than zero, but not greater than 1, and where the amounts of M, Z, and Co are sufficient to substantially satisfy the valence requirements of oxygen in the spinel structure.

2. The composite of Claim 1, wherein M is selected from at least one of Cu, Mg or Zn.

3. The composite of Claim 1 or 2, wherein Z is Li.

4. The composite of any one of the preceding Claims wherein the coating of monometal or polymetal cobalt spinel contains dispersed therein up to about 50 percent, on a metal-to-metal molar basis, of at least one modifier selected from the oxides of metals of Groups III-A, IV-A, V-A, VI-A, VII-A, III-B, IV-B, V-B, lanthanides, and actinides.

5. The composite of Claim 4 wherein the modifier metal oxide comprises $ZrO_2$.

6. The composite of any one of the preceding Claims, including between the substrate and the spinel coating an interface coating comprising a layer of at least one metal oxide selected from lead oxide, tin oxide, antimony oxide, aluminum oxide, and indium oxide.

7. The composite of Claim 6 wherein the interface coating comprises tin oxide, indium oxide, a mixture of tin oxide and antimony oxide, or a mixture of indium oxide and antimony oxide.

8. The use of the composite of any one of the preceding Claims as an anode in a brine electrolysis cell.

9. The use of the composite of any one of Claims 1 to 7 as an anode in an oxygen-producing device for electrolyzing alkaline, acid, or neutral aqueous liquids.

10. The use of the composite of any one of Claims 1 to 7 as an anode for the preparation of oxygen-containing organic compounds.

11. The use of the composite of any one of Claims 1 to 7 as an anode material for the electrolytic decomposition of aqueous liquids to produce oxygen.

12. A method for oxygen-generation by electrolyzing an oxygen-containing electrolyte in an electrolysis cell containing an ion permeable divider between cathode and anode, characterized by having as an anode material at least one composite according to any one of Claims 1 to 7.

**Patentansprüche**

1. Elektrisch leitfähiger Schichtkörper mit einem elektrisch leitfähigen Substrat eines filmbildenden Metalls, das auf mindestens einem Teil davon eine leitfähige Spinelbeschichtung hat, dadurch gekennzeichnet, daß die Spinellbeschichtung eine durch Metallkation substituierte Kobaltoxid-Spinellstruktur umfaßt, die im wesentlichen der empirischen Formel $M_xZ_yCo_{3-(x+y)}O_4$ entspricht, worin M mindestens ein Metall der Gruppe IB, IIA oder IIB darstellt,

Z mindestens ein Metall der Gruppe IA darstellt,

x ein numerischer Wert größer als 0, aber nicht größer als 1 ist,

y ein numerischer Wert größer als 0, aber nicht größer als 0,5 ist

die Summe von x und 2y größer als 0 ist, aber nicht größer als 1 ist,

und worin die Mengen an M, Z und Co ausreichend sind, um im wesentlichen den Valenzerfordernissen des Sauerstoffs in der Spinellstruktur zu genügen.

2. Schichtkörper nach Anspruch 1, dadurch gekennzeichnet, daß M ausgewählt ist aus mindestens einem Bestandteil von Kupfer, Magnesium oder Zinn.

3. Schichtkörper nach Anspruch 1 oder 2, dadurch gekennzeichnet, daß Z Li ist.

4. Schichtkörper nach einem der vorhergehenden Ansprüche, dadurch gekennzeichnet, daß die Beschichtung aus Monometall- oder Polymetall-Kobaltspinell darin dispergiert bis zu etwa 50%, auf molarer Metall-zu-Metall-Basis, mindestens eines Modifiziermittels enthält, das ausgewählt ist aus den Oxiden der Metalle der Gruppen IIIA, IVA, VA, VIA, VIIA, IIIB, IVB, VB, Lanthaniden und Actiniden.

5. Schichtkörper nach Anspruch 4, dadurch gekennzeichnet, daß das Modifiziermetalloxid $ZrO_2$ umfaßt.

6. Schichtkörper nach einem der vorhergehenden Ansprüche, dadurch gekennzeichnet, daß er zwischen dem Substrat und der Spinellbeschichtung eine Zwischenbeschichtung enthält, die eine Schicht von mindestens einem Metalloxid umfaßt, das ausgewählt ist aus Bleioxid, Zinnoxid, Antimonoxid, Aluminiumoxid und Indiumoxid.

7. Schichtkörper nach Anspruch 6, dadurch gekennzeichnet, daß die Zwischenbeschichtung Zinnoxid, Indiumoxid, eine Mischung aus Zinnoxid und Antimonoxid, oder eine Mischung aus Indiumoxid und Antimonoxid umfaßt.

8. Verwendung des Schichtkörpers nach einem der vorhergehenden Ansprüche als Anode in einer Salzsole-Elektrolysezelle.

9. Verwendung des Schichtkörpers nach einem der Ansprüche 1 bis 7 als Anode in einer Sauerstoff entwickelnden Vorrichtung zur Elektrolyse alkalischer, saurer oder neutraler wäßriger Flüssigkeiten.

10. Verwendung des Schichtkörpers nach einem der Ansprüche 1 bis 7 als Anode zur Herstellung von Sauerstoff enthaltenden organischen Verbindungen.

11. Verwendung des Schichtkörpers nach einem der Ansprüche 1 bis 7 als Anodenmaterial für die elektrolytische Zersetzung wäßriger Flüssigkeiten zur Herstellung von Sauerstoff.

12. Verfahren zur Sauerstofferzeugung durch Elektrolyse eines Sauerstoff enthaltenden Elektrolyts in einer Elektrolysezelle, die einen ionendurchlässigen Raumteiler zwischen Kathode und Anode enthält, dadurch gekennzeichnet, daß man als Anodenmaterial mindestens einen Schichtkörper nach einem der Ansprüche 1 bis 7 verwendet.

**Revendications**

1. Composite électriquement conducteur comprenant un substrat électriquement conducteur d'un métal filmogène ayant, sur au moins une partie de celui-ci, un revêtement de spinelle caractérisé par le fait que le revêtement de spinelle comprend une structure de spinelle d'oxyde de cobalt substitué par un cation métallique répondant sensiblement à la formule empirique $M_xZ_yCo_{3-(x+y)}O_4$,

dans laquelle M représente au moins un métal du groupe IB, IIA ou IIB,

Z représente au moins un métal du groupe IA,

x est une valeur numérique supérieure à zéro, mais non supérieure à 1,

y est une valeur numérique supérieure à zéro, mais non supérieure à 0,5,

la somme x et de 2y est supérieure à zéro, mais non supérieure à 1,

et dans laquelle les quantités de M, Z et Co sont suffisantes pour saitsfaire sensiblement les exigences de valence de l'oxygène dans la structure de spinelle.

2. Composite selon la revendication 1, dans lequel M est choisi parmi au moins un des métaux Cu, Mg, ou Zn.

3. Composite selon la revendication 1 ou 2, dans lequel Z est Li.

4. Composite selon l'une des revendications précédentes, dans lequel le revêtement de spinelle de cobalt monométallique ou polymétallique contient en dispersion jusqu'à environ 50 pourcent, sur une base molaire de métal à métal, d'au moins un modificateur choisi parmi les oxydes des métaux des groupes III-A, IV-A, V-A, VI-A, VII-A, III-B, IV-B, V-B, des lanthanides et des actinides.

5. Composite selon la revendication 4, dans lequel l'oxyde de métal modificateur comprend $ZrO_2$.

6. Composite selon l'une des revendications précédentes comprenant, entre le substrat et le revêtement de spinelle, un revêtement interfacial comprenant une couche d'au moins un oxyde métallique choisi parmi l'oxyde de plomb, l'oxyde d'étain, l'oxyde d'antimoine, l'oxyde d'aluminium et l'oxyde d'indium.

7. Composite selon la revendication 6, dans lequel le revêtement interfacial comprend de l'oxyde d'étain, de l'oxyde d'indium, un mélange d'oxyde d'étain et d'oxyde d'antimoine, ou un mélange d'oxyde d'indium et d'oxyde d'antimoine.

8. Utilisation du composite selon l'une des revendications précédentes comme anode dans une cellule d'électrolyse de saumure.

9. Utilisation du composite selon l'une des revendications 1 à 7 comme anode dans un dispositif produisant de l'oxygène pour électrolyser des liquides aqueux, alcalins acides ou neutres.

10. Utilisation du composite selon l'une des revendications 1 à 7, comme anode pour la préparation de composés organiques contenant de l'oxygène.

11. Utilisation du composite selon l'une des revendications 1 à 7 comme matière d'anode pour la décomposition électrolytique de liquides aqueux pour produire de l'oxygène.

12. Procédé de production d'oxygène en électrolysant un électrolyte contenant de l'oxygène dans une cellule d'électrolyse contenant un diviseur perméable aux ions entre cathode et anode, caractérisé par le fait qu'il comporte comme matière d'anode au moins un composite selon l'une des revendications 1 à 7.

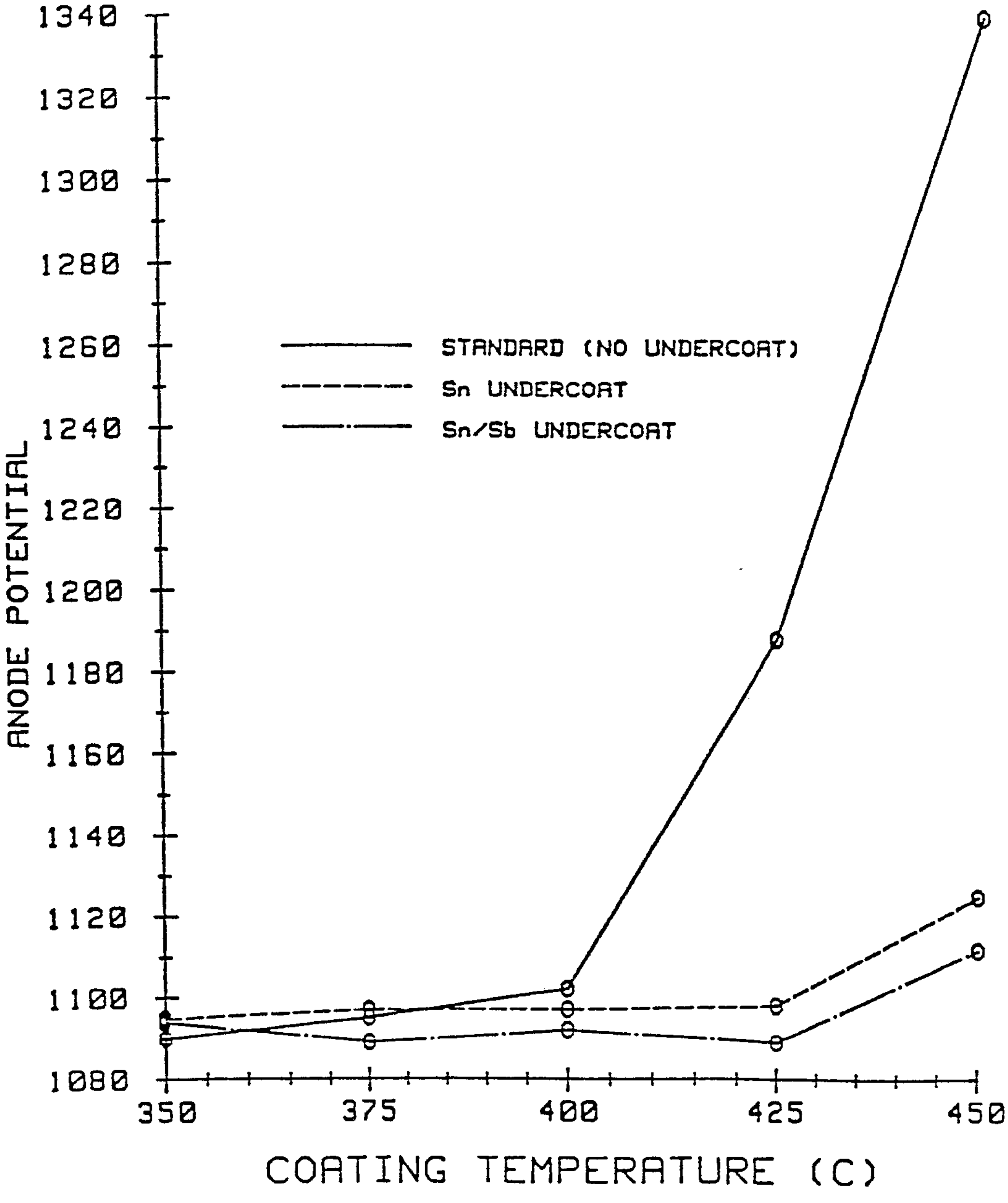
1340
1320
1300
1280
1260
1240
1220
1200
1180
1160
1140
1120
1100
1080
ANODE POTENTIAL
STANDARD (NO UNDERCOAT)
Sn UNDERCOAT
Sn/Sb UNDERCOAT
350
375
400
425
450
COATING TEMPERATURE (C)